# EUROPÄISCHE PATENTSCHRIFT

(11) **EP 2 566 644 B1**
(45) Veröffentlichungstag und Bekanntmachung des Hinweises auf die Patenterteilung: **29.04.2015**
(21) Anmeldenummer: 11733779.0
(22) Anmeldetag: 30.03.2011
(51) Int. Cl.: B23B 31/16

(54) **ZENTRISCHE SPANNVORRICHTUNG**
CENTRIC CLAMPING DEVICE
MANDRIN CENTRÉ

(30) Priorität: 15.06.2010 DE 102010023797; 05.05.2010 DE 102010022804
(43) Veröffentlichungstag der Anmeldung: 13.03.2013
(73) Patentinhaber: Karlein, Birgitt, 97638 Mellrichstadt (DE)
(72) Erfinder: KARLEIN, Birgitt, 97638 Mellrichstadt (DE); KARLEIN, Eugen, 97638 Mellrichstadt (DE)
(74) Vertreter: advotec.
(86) Internationale Anmeldenummer: PCT/DE2011/000345
(87) Internationale Veröffentlichungsnummer: WO 2011/137884

(56) Entgegenhaltungen:
- WO-A1-80/00427
- WO-A1-2008/031392
- DE-A1- 2 808 272
- DE-C- 127 809
- GB-A- 1 214 959
- JP-A- 2001 087 908
- JP-U- H0 549 207
- US-A- 2 921 796
- US-A- 4 103 915
- US-A- 4 938 491

## Beschreibung

Die Erfindung betrifft eine Spannvorrichtung zur Verwendung bei einer Drehmaschine oder dergl. zum Spannen von Werkstücken mittels einer Mehrzahl von Spannbacken gemäß dem Oberbegriff des Anspruchs 1.

Eine solche Spannvorrichtung ist aus der US 2,921,796 bekannt.

Spannfutter für Drehmaschinen sind aus dem Stand der Technik in verschiedenen Ausführungen hinlänglich bekannt. Zum Spannen von runden Werkstücken wird im Stand der Technik bei Drehmaschinen in der Regel ein Dreibackenfutter eingesetzt und im Falle von quadratischen Werkstücken ein sogenanntes Vierbackenfutter. Diesbezüglich bedarf es keiner weiteren Ausführungen. Gemeinsam ist dem regulären Spannfutter, dass die mehreren Spannbacken - in der Regel drei oder vier - zugleich manuell, hydraulisch oder elektrisch verstellt werden und immer den gleichen Abstand zur Drehachse aufweisen.

Bei der vorliegenden Erfindung handelt es sich insbesondere um eine Spannvorrichtung zum zentrischen Spannen von Werkstücken mit einer von einer exakten Rundheit abweichenden Form, bzw. von rechteckigen Werkstücken oder runden Werkstücken mit Formfehlern.

Es ist offensichtlich, dass mit einem regulärem Drei- oder Vierbackenfutter eine derartige Spannaufgabe nicht erfüllt werden kann.

Zu diesem Zweck sind aus dem Stand der Technik Spannfutter mit vier Spannbacken bekannt, wobei jeweils zwei gegenüberliegende Spannbacken einen gemeinsamen Antrieb aufweisen und zugleich verstellt werden können. Das hier zum Einsatz kommende Verfahren beruht darauf, dass zunächst ein sich um 180 Grad gegenüberliegendes Backenpaar auf das Werkstück zu bewegt wird und auf der gemeinsamen Achse das Werkstück zur Drehachse hin zentriert. Anschließend wird das um 90 Grad versetzte Backenpaar auf das Werkstück zu bewegt und hat gleichfalls die Aufgabe, eine Zentrierung in Richtung der Drehachse zu bewerkstelligen. Nach diesem Zentriervorgang wird der zum Drehen notwendige Spanndruck beaufschlagt. Dieses Verfahren hat sich beim Spannen mit Spannbacken bewährt, wenngleich keine genaue Zentrierung des Werkstückes auf die Drehachse gegeben ist und der Spanndruck auf die vier Backen in aller Regel geringfügig unterschiedlich ausfällt. In Fortführung sind zur Verbesserung und zur Beschleunigung des Spannvorganges anstelle des mechanischen Antriebs hydraulisch betätigte Spannfutter bekannt, wobei ein wesentlicher Unterschied zum manuellen Spannen im Doppelhubzylinder begründet liegt.

Nachteilig bei dieser Lösung ist jedoch, dass unverändert ein zentrisches Spannen mit gleichmäßigem Spanndruck auf alle Spannbacken insbesondere bei Formfehlern nicht möglich ist. Es besteht faktisch keine Möglichkeit, Rohteile mit Formabweichungen zentrisch sicher zu spannen. Insbesondere bei Unrundheiten ergibt es sich zwangsläufig, dass eine Backe nicht am Werkstück anliegt oder die um 90 Grad versetzten Backenpaare mit unterschiedlichem Spanndruck am Teil anliegen.

Insbesondere der Versuch, das Werkstück zentrisch zu spannen, führt zu einem nicht unerheblichen Spannaufwand, wenn mehrmalige Rundlaufkontrollen und ein entsprechendes Nachzentrieren des Werkstückes erforderlich werden. Hinzu kommt, dass das Spannfutter hierzu jeweils gedreht werden muss oder der Maschinenbediener bei großen Drehtischen um die Planscheibe herum laufen muss.

In dem betrachteten Anwendungsfall werden die Werkstücke daher in der Regel auf sogenannten Planscheiben aufgespannt. Hierbei sind die vorhandenen - in der Regel sind es vier - Spannbacken des Spannfutters einzeln verstellbar. Hierbei sind die Spannbacken direkt oder indirekt in radial ausgerichteten Führungen gelagert. Insofern ist ein Spannen von Werkstücken weitgehend beliebiger Geometrie möglich.

In einer bekannten Ausführungsform befinden sich auf der Planscheibenoberseite vier Führungen, die im Winkel von je 90 Grad zueinander angeordnet sind und zentrisch zur Drehachse verlaufen. In diesen Führungen sind Grundbacken verschiebbar gelagert. Diese Grundbacken dienen zur Aufnahme der eigentlichen Spannbacken, welche in der Regel aufgeschraubt werden. Die Grundbacken sind jeweils mit einem Spindelantrieb ausgerüstet und können somit einzeln verstellt werden. Die Grundbacken decken hierbei den gesamten Spannbereich der Planscheibe ab. Diese Ausführung ist vergleichbar mit einem typischen Spannfutter, nur dass jede Spannbacke einzeln verstellt wird.

In einer anderen bekannten Ausführungsform ist die Planscheibenoberfläche mit vier um je 90 Grad versetzten Rasteinrichtungen ausgerüstet. Diese Rasteinrichtungen verlaufen ebenfalls zentrisch zur Drehachse. Hier sind sogenannte Klauenkästen montiert, wobei diese mittels der Rasteinrichtungen radial versetzt und fixiert werden können. Diese Klauenkästen sind jeweils mit einer Führung ausgestattet, die gleichfalls radial zur Drehachse verläuft. In diesen Führungen sind Grundbacken verschiebbar gelagert, die zur Aufnahme der Spannbacken dienen. Hierbei kann ebenfalls jede einzelne Grundbacke durch einen Spindelantrieb verstellt werden. Bei dieser Ausführungsform ist der Backenhub auf einen kurzen Weg begrenzt. Aufgrund der Umsetzbarkeit der Klauenkästen wird ebenfalls ein großer Spannbereich mit einem derartigen Spannfutter abgedeckt.

Bei diesem Spannverfahren ist somit keineswegs sichergestellt, dass alle Backen mit dem gleichen Spanndruck am Werkstück anliegen. Hier kann es insbesondere beim Spannen von dünnwandigen Werkstücken oder Ringen zu Verspannungen kommen. Problematisch ist besonders, wenn dünnwandige Werkstückrohlinge unrund sind. Hier kann es zu Fehleinschätzungen des Maschinenbedieners kommen, wenn sich aus Rundlaufkontrollen am Werkstück fortwährend Abweichungen ergeben. Insofern ist bei diesem Spannverfahren die Qualität des zu bearbeitenden Werkstückes im hohen Maße von der Erfahrung und dem Können des Maschinenbedieners abhängig.

Weiterhin sind aus dem Stand der Technik sogenannte Pendelbacken bzw. Systempendelvorrichtungen bekannt, bei denen jeweils zwei Spannbacken schwenkbar auf einen Grundträger montiert sind. Wenngleich mit dieser Lösung vorteilhaft ein gleichmäßiger Spanndruck auf jeweils zwei Spannbacken verteilt werden kann, ist jedoch ein Spannen von nicht runden Werkstücken nahezu ausgeschlossen. Sobald die gegenüberliegenden Spannbacken zweier Pendelbacken am Werkstück anliegen und dieses fixieren, ist eine Verschiebung des Werkstücks durch die weiteren quer angeordneten Spannbacken nahezu ausgeschlossen. Folglich können die beiden anderen Pendelbackenpaare nur noch an das Werkstück heran verstellt werden, ohne jedoch in dessen zweiter Richtung eine exakte Zentrierung zu ermöglichen. Es ist naheliegend, dass beim Spannen zur Aufbringung der notwendigen Haltekraft von dem zweiten Paar Pendelbacken nur eines zur festen Anlage gebracht werden kann, während hingegen zumindest eine Pendelbacke keinen ausreichenden Spanndruck aufbringen kann. Ein zeitlich versetztes Spannen mit den um 90 Grad versetzten Backenpaaren, was für nicht runde Werkstücke notwendig wäre, verhindert somit den Einsatz der Pendelbacken mit dem Ziel des zentrischen verformungsfreien Spannens von Werkstücken.

Entsprechend ist es Aufgabe der vorliegenden Erfindung, bei einer Vorrichtung, mit der es möglich ist, Werkstücke mit Abweichungen von einer runden oder quadratischen Form zentrisch zu spannen, unter Beaufschlagung eines gleichmäßigen Spanndrucks auf alle Spannstellen verteilt, die Zentrierbewegung zu verbessern.

Die Aufgabe wird mit einer erfindungsgemäßen Vorrichtung gemäß Anspruch 1 gelöst.

Vorteilhafte Ausführungsformen sind Gegenstand der Unteransprüche.

Eine gattungsgemäße Spannvorrichtung dient zur Verwendung an einer Drehmaschine, insbesondere einer Planscheibe. Die Verwendung ist nicht auf eine reguläre Drehmaschine beschränkt, sondern ist gleichfalls bei sonstigen Werkzeugmaschinen gegeben. Insofern ist auch eine uneingeschränkte Verwendung zur Aufspannung eines Werkstücks an beispielsweise einem Bearbeitungszentrum gegeben. Die Verwendung eignet sich insbesondere, wenn es gilt, ein zentrisches und verformungsfreies Spannen von Werkstücken zu ermöglichen.

Im vorliegenden Fall weist die gattungsgemäße Spannvorrichtung eine Mehrzahl von sternförmig zu einer Drehachse in einem Vorrichtungsträger verlaufenden Trägerführungen auf. Bei einer nicht drehenden Spannvorrichtung - bzw. in der Verwendung bei einem Bearbeitungszentrum - entspricht dessen Mittelachse der im Folgenden betrachteten Drehachse. In den Trägerführungen ist jeweils ein Spanngrundträger, an dem zumindest eine Spannbacke zum Spannen von Werkstücken angebracht werden kann, in einer Trägerrichtung verschiebbar gelagert. Insofern verläuft die Trägerrichtung jeweils radial zur Drehachse. Mittels eines Stellantriebs der Spannvorrichtung können die Spanngrundträger zugleich in den jeweiligen Trägerrichtungen verstellt werden.

Insofern erfüllt die gattungsgemäße Spannvorrichtung die Aufgabe des gleichzeitigen Spannens eines Werkstücks mittels mehrerer Spannbacken, wie dies von jedem gewöhnlichen Dreibacken- bzw. Vierbackenfutter bekannt ist.

Bei einer erfindungsgemäßen Spannvorrichtung ist vorgesehen, dass zumindest zwei Spanngrundträger mittels einer Außenwippe direkt oder indirekt miteinander gekoppelt sind, wobei zumindest in der Mitte des Stellwegs der Spanngrundträger eine begrenzte Verschiebung eines Spanngrundträgers nach innen zu einem Schwenken der Außenwippe und einer Verschiebung des gekoppelten Spanngrundträgers nach außen führt.

Welcher Art die Verbindung zwischen den Spanngrundträgern und der Außenwippe ist, ist zunächst beliebig. Hierbei gilt es grundsätzlich zu beachten, dass es bei einem Verschieben eines Spanngrundträgers in radialer Richtung zugleich über die Kopplung mittels der Außenwippe zu einer gegenläufigen Verschiebung des anderen Spanngrundträgers kommt.

Durch die beschriebene Ausführungsform wird es vorteilhaft ermöglicht, Werkstücke mit einer von einer exakten Rundheit abweichenden Form in einfacher Weise zentrisch und gleichmäßig zu spannen. Aufgrund des Ausgleichs zweier Spanngrundträger über die Kopplung mittels der Außenwippe wird erreicht, dass bei Anliegen einer ersten Spannbacke über das Schwenken der Außenwippe ein Heranfahren des zweiten Spanngrundträgers bzw. somit der zweiten Spannbacke möglich ist, ohne dass zuvor an der ersten Spannbacke das Werkstück bereits fest fixiert wäre. Somit kann insbesondere bei einem manuell betätigten Spannfutter mittels der zentralen Spannvorrichtung ein Spannvorgang durchgeführt werden, bei dem Bauteile zentrisch gespannt werden und hierbei ein gleichmäßiger Spanndruck bei allen Spannbacken erzeugt wird. Somit ist diese Vorrichtung besonders geeignet, unrunde Werkstücke, d.h. Werkstücke mit einer von einer genauen Rundheit abweichenden Spannfläche, zentrisch und sicher zu spannen.

Durch den Ausgleich über die Außenwippe werden nicht nur die Unrundheiten ausgeglichen, sondern es wird auch sichergestellt, dass ein gleichmäßiger Spanndruck an den Spannstellen anliegt. Hierdurch wird es ermöglicht, gleichfalls auch Werkstücke zu spannen, welche ansonsten mit Verformungen auf einen zu hohen lokalen Spanndruck reagieren.

Gleichfalls wird auch das Einsatzgebiet mit dem Spannen von quadratischen und rechteckigen Werkstücken eröffnet. Ebenso ist in diesem Fall das zentrische Spannen von Werkstücken sichergestellt.

Insofern werden durch die beschriebene Ausführungsform die Vorteile eines regulären Drei- bzw. Vierbackenfutters kombiniert mit den Vorteilen des Spannens mittels Pendelvorrichtung bzw. einzeln verstellbarer Spannbacken. Somit wird eine große Flexibilität hinsichtlich der aufnehmbaren Werkstücke geschaffen und dennoch zugleich ein schnelles und unkompliziertes Spannen ermöglicht.

Hinsichtlich der Anordnung der Spannbacken relativ zum Spanngrundträger gibt es verschiedene Möglichkeiten. Grundsätzlich unerheblich ist hierbei zunächst die Gestaltung der Spannbacken. Diesbezüglich ist lediglich eine Montierbarkeit an den Spanngrundträgern erforderlich, wobei diese Spannbacken somit zugleich von den Spanngrundträgern verstellt werden können. Gleichfalls ist es ohne Einschränkung möglich, beispielsweise Pendelbacken als Spannbacken einzusetzen bzw. an den Spanngrundträgern zu montieren.

Vorteilhafterweise ist in einer ersten Variante am jeweiligen Spanngrundträger eine parallel zur Trägerführung liegende Backenführung vorhanden. Hierbei ist vorgesehen, dass an der Backenführung die Spannbacke gleichfalls radial zur Drehachse verschiebbar und fixierbar ist. Als Alternative zur Verwendung einer Spannbacke ist die Verwendung einer gleichfalls in der Backenführung verschiebbaren und daran fixierbaren Systempendelvorrichtung möglich, wobei hierdurch die Spannkraft auf jeweils zwei Spannstellen verteilt wird und somit eine nochmals bessere Kraftverteilung und Spannungsreduzierung erreicht wird. In diesem Falle weist eine Systempendelvorrichtung ihrerseits zwei beabstandete, pendelnd gelagerte Spannflächen auf.

Alternativ zur Ausführungsform mit einer Backenführung kann es vorteilhaft sein, wenn am Spanngrundträger zwei symmetrisch zur Trägerführung liegende Backenführungen vorhanden sind. Die Symmetrie bezieht sich hierbei auf eine durch die Drehachse und die Mitte der Trägerführung definierte Ebene. Insofern ist es offensichtlich, dass die Backenführungen wahlweise gleichfalls parallel beabstandet angeordnet werden oder in vorteilhafter Weise gleichfalls in Sternform zur Drehachse angeordnet sind. Es ist offensichtlich, dass aufgrund der variablen Position der Spanngrundträger im Vorrichtungsträger die Backenführungen nicht radial zentrisch auf die Drehachse ausgerichtet werden können, sondern dieses lediglich ein Zustand innerhalb des Stellbereichs des Spanngrundträgers sein kann. Vorteilhaft ist die Anordnung von zwei symmetrischen Trägerführungen für den Fall, dass eine doppelte Anzahl von Spannstellen bzw. Spannbacken gefordert wird. Zu beachten ist jedoch, dass die beiden Spannbacken des einen Spanngrundträgers nicht zueinander pendelnd gelagert sind, und somit zugleich eine gleichmäßige Verteilung der Spannkraft auf die beiden Spannbacken eines Spanngrundträgers nicht zwingend sichergestellt ist.

Als Alternative zur Verwendung einer in einer Backenführung verschiebbaren Systempendelvorrichtung ist es vorteilhaft, wenn am Spanngrundträger eine Systempendelvorrichtung montiert wird. In diesem Falle weist die Systempendelvorrichtung zumindest zwei Backenführungen auf, auf denen wiederum Spannbacken verschiebbar angeordnet und fixiert werden können. Gleichfalls wird hier durch den Einsatz einer Pendelvorrichtung sichergestellt, dass bei beiden Spannbacken der Pendelvorrichtung der gleiche Spanndruck beim Spannen des Werkstücks anliegt.

In jedem Fall ist es besonders vorteilhaft, wenn an der Backenführung - gleich in welcher Variante - eine Rastverzahnung vorhanden ist, wobei zumindest eine Spannbacke bzw. eine Pendelvorrichtung entlang der Backenführung verschoben und im Rastintervall fixiert werden kann. Durch die Backenführung mit der Rastverzahnung kann eine einfache und sichere Fixierung der Spannbacken am Spanngrundträger realisiert werden, wobei dennoch ein großer Spannbereich vorhanden ist. Somit bedarf es zur Realisierung der erfindungsgemäßen Spannvorrichtung lediglich eines begrenzten Stellbereichs der Spanngrundträger. Hierbei muss dieser Stellbereich zumindest geringfügig größer gewählt werden als es das Intervall der Rastverzahnung vorgibt.

Bei besonders vorteilhafter Ausführungsform ist zumindest zweimal eine Anordnung mit einer Außenwippe und zwei Spanngrundträgern vorhanden. Dies bedeutet, dass immer zwei Spanngrundträger mit einer Außenwippe gekoppelt sind und eine Anordnung bilden. Hierbei ist nicht vorgesehen, dass die beiden bereits über eine Außenwippe gekoppelten Spanngrundträger zusätzlich mit den weiteren jeweils benachbarten Spanngrundträgern gekoppelt sind. Insofern liegt immer eine doppelte Anzahl von Spanngrundträgern im Verhältnis zur Anzahl der Außenwippen vor. Bei dieser Ausführungsform ist somit im einfachsten Falle von einer doppelten Anordnung mit zwei Außenwippen und vier Spanngrundträgern auszugehen. Gleichfalls kann diese Anordnung um eine Mehrzahl erweitert werden und insbesondere auch somit eine Anordnung von drei Außenwippen und sechs Spanngrundträgern oder von vier Außenwippen und acht Spanngrundträgern umfassen.

Hierbei sichert vorteilhafterweise eine symmetrische Auslegung der Außenwippe und der Verbindung zu den Spanngrundträgern eine gleichmäßige Bewegung sowie eine gleichmäßige Kraftverteilung.

Es ist offensichtlich, dass es für den funktionsgemäßen Aufbau einer Anordnung aus Außenwippe und zwei Spanngrundträgern erforderlich ist, einen Ausgleich zwischen der Außenwippe in deren Schwenkbewegung und den Spanngrundträgern in deren Stellbewegungen zu ermöglichen. Aufgrund der in den Trägerrichtungen radial zur Drehachse verstellbaren Spanngrundträger ändert sich folglich der Abstand der beiden gekoppelten Spanngrundträger zueinander. Insofern bedarf es bei der Kopplung mittels der Außenwippe eines Ausgleichs dieses sich ändernden Abstands zwischen jeweils zwei Spanngrundträgern. Weiterhin erfordert die erfindungsgemäß vorgesehene gegenläufige Verschiebbarkeit zweier Spanngrundträger in den Trägerrichtungen eine Ausgleichsmöglichkeit in der Anbindung an die Außenwippe.

Hierbei steht zum einen die Möglichkeit offen, beispielsweise am Ende der Außenwippe Kugelgelenke vorzusehen, welche in Bohrungen in den Spanngrundträgern eingreifen und hierbei tangential zur Drehachse verschiebbar sind. Nachteilig bei dieser Lösung ist jedoch, dass es zu einer Reibung des Kugelgelenks in der Bohrung in der Außenwippe aufgrund einer Schubbewegung in der Bohrung kommt. Somit ist eine Funktionstauglichkeit über einen langen Zeitraum nicht zweifelsfrei gewährleistet.

Insofern ist es besonders vorteilhaft, zwischen der Außenwippe und den beiden gekoppelten Spanngrundträgern jeweils ein Ausgleichselement anzuordnen. Dieses bedarf einer beidseitig schwenkbaren Lagerung zwischen dem Ausgleichselement und der Außenwippe bzw. dem Spanngrundträger. Somit kann in einfacher Weise eine Verschiebung eines Spanngrundträgers über ein Verstellen des Ausgleichselements zu einem Schwenken der Außenwippe und einem gegenläufigen Verstellen des anderen Ausgleichselements und somit der gegenläufigen Verschiebung des anderen Spanngrundträgers führen.

Zur Umsetzung der Spannbewegung ist es besonders vorteilhaft, wenn die Außenwippe mittels eines Stellantriebs linear in eine Schubrichtung verschoben werden kann. Durch die Kopplung zweier Spanngrundträger an der Außenwippe führt folglich eine Verschiebung der Außenwippe in der Schubrichtung zugleich zu einer Verschiebung der Spanngrundträger in den jeweiligen Trägerrichtungen.

Hierbei ist es besonders vorteilhaft, wenn die beiden an der Außenwippe gekoppelten Spanngrundträger bzw. somit dessen beiden Trägerrichtungen symmetrisch zu einer Ebene aus Schubrichtung und Drehachse angeordnet sind. Somit ist sichergestellt, dass es zunächst unter gedanklicher Vernachlässigung der Schwenkbarkeit der Außenwippe bzw. der gegenläufigen Verschiebbarkeit der Spanngrundträger zu einer gleichmäßigen Bewegung montierter Spannbacken zur Drehachse hin bzw. von der Drehachse weg kommt.

Weiterhin ist es besonders vorteilhaft, wenn die Außenwippe schwenkbar mit einem in Schubrichtung verschiebbaren Seitenschieber verbunden ist. Zu diesem Zweck ist der Seitenschieber im Vorrichtungsträger derart gelagert, dass mittels des Stellantriebs der Seitenschieber in Schubrichtung bewegt werden kann und quer zur Schubrichtung feststehend ist, d.h. der Seitenschieber kann ausschließlich in einer Achse in Schubrichtung bewegt werden. Die Lagerung kann hierbei über den Stellantrieb erfolgen und/oder alternativ mittels Führungen im Vorrichtungsträger.

Zum Erhalt einer gleichmäßigen Bewegung aller Spanngrundträger einer Spannvorrichtung ist es besonders vorteilhaft, wenn die Schubrichtung bzw. die Mitte des Seitenschiebers die Drehachse schneidet. In diesem Falle ist es erforderlich, dass die schwenkbare Anbindung der Außenwippe an den Seitenschieber gleichfalls in der Mitte der Seitenschieber liegt, d.h. die Anbindung wird über die Verstellung der Seitenschieber auf die Drehachse zu oder von der Drehachse weg bewirkt. Nicht erforderlich ist hierbei eine exakt senkrechte Ausrichtung der Schubrichtung auf die Drehachse, jedoch vereinfacht dieses die Konstruktion und Herstellung der Spannvorrichtung.

Zur Umsetzung des Stellantriebs stehen verschiedene Möglichkeiten offen, wobei in besonders vorteilhafter Weise als Stellantrieb eine in Schubrichtung angeordnete Stellspindel eingesetzt wird. Hierbei ist die Stellspindel in einem ersten Seitenschieber mit einem Linksgewinde und einem zweiten gegenüberliegenden Seitenschieber mit einem Rechtsgewinde gelagert. Folglich führt eine Drehbewegung der Stellspindel zu einer gegenläufigen Bewegung der Seitenschieber aufeinander zu oder voneinander weg. Es ist offensichtlich, dass somit mit der Bewegung der Stellspindel und der gegenläufigen Bewegung der Seitenschieber zugleich die Außenwippen verschoben werden und somit eine Bewegung der Spanngrundträger bzw. der Spannbacken aufeinander zu oder voneinander weg erfolgt.

Wenngleich es nicht zwingend erforderlich ist, wird hierbei vorteilhafterweise die Stellspindel drehbar und in Schubrichtung feststehend im Vorrichtungsträger gelagert. Besonders vorteilhaft ist es hierbei, wenn die Positionierung der Stellspindel in Achsrichtung mittig auf der Drehachse erfolgt, wobei über Einstellmittel, wie beispielsweise Justiermuttern, eine axiale Einstellung der Position der Stellspindel vorgenommen werden kann. Somit wird sichergestellt, dass die Seitenschieber beidseitig den gleichen Abstand zur Drehachse aufweisen. Es ist offensichtlich, dass beispielsweise zur Anbringung eines Antriebs an der Stellspindel oder zur Lagerung der Stellspindel die Seitenschieber nicht zwingend symmetrisch ausgeführt werden müssen. Insofern bezieht sich der gleiche Abstand zur Drehachse auf die funktionelle Zuordnung in Verbindung mit den beiden jeweiligen Außenwippen.

Die Positionierung der Stellspindel ist zunächst beliebig. Jedoch ist es besonders vorteilhaft, wenn deren Achse senkrecht zur Drehachse verläuft. Somit wird zunächst einmal ein symmetrischer Aufbau der Seitenschieber ermöglicht. Weiterhin ist es besonders vorteilhaft, wenn die Achse der Stellspindel die Drehachse schneidet. Somit wird sichergestellt, dass die Stellkraft auf die Seitenschieber als Zug- bzw. Druckkraft wirkt und die Querkräfte minimiert sind. Somit kann ggf. auf eine Führung für die Seitenschieber im Vorrichtungsträger verzichtet werden.

Als alternative Lösung ist es möglich, zwei Seitenschieber über eine Keilführung mit einem Keilelement zu koppeln. Hierbei führt eine Stellbewegung des Keilelements in einer Stellrichtung mittels des Stellantriebs zu einer entgegengesetzten Bewegung der Seitenschieber. Folglich wird gleichfalls die Spannaufgabe dahingehend gelöst, dass die Verstellung eines Keilelements mittels des Stellantriebs zu einer Bewegung der Spannbacken auf die Drehachse zu bzw. von der Drehachse weg führt. Zur Umsetzung bedarf es spitzwinkelig zueinander ausgerichteter Keilführungen. Den Winkel wird der Fachmann anhand der notwendigen Stellwege der Seitenschieber und der erforderlichen Stellkraft wählen, wobei ein kleiner Winkel zu einem kleinen Stellweg und zu hohen Stellkräften führt.

In der Anordnung wird des Weiteren die Stellrichtung zweckmäßig senkrecht zur Schubrichtung ausgerichtet. Insofern wird sichergestellt, dass die Verschiebung des Keilelements zu einer gleichmäßigen Verschiebung der Seitenschieber führt. Hierbei ist es besonders vorteilhaft, wiederum eine Stellspindel einzusetzen, welche im Vorrichtungsträger gelagert werden kann und im Keilelement zu dessen Verschiebung führt. Hierbei ist es ebenso denkbar, die Stellspindel axial feststehend im Keilelement zu lagern und das Stellgewinde im Vorrichtungsträger vorzusehen.

Alternativ zur Ausrichtung der Stellrichtung des Keilelements senkrecht zur Drehachse ist es beim Einsatz eines hydraulischen bzw. pneumatischen oder elektrischen Antriebs möglich, die Stellrichtung parallel bzw. übereinstimmend mit der Drehachse zu wählen. Da in diesem Fall keine Zugänglichkeit zur Bedienung erforderlich ist, ist es unerheblich, dass der Stellantrieb insofern vollständig in der Spannvorrichtung bzw. hinter einem aufgenommenen Werkstück angeordnet ist.

Wenngleich über die beidseitig in den Seitenschiebern eingreifenden Keilführungen in Verbindung mit dem Stellantrieb eine Positionierung des Keilelements vorgegeben ist, ist es besonders vorteilhaft, wenn das Keilelement seinerseits in einer linearen Führung im Vorrichtungsträger gelagert ist. Somit wird insbesondere sichergestellt, dass es zu keinem Verkanten bzw. Klemmen des Keilelements beim Verstellen kommt.

Weiterhin ist es zur Verstellung der Seitenschieber möglich, diese beispielsweise wie Grundbackenträger eines regulären Dreibackenfutters zu verstellen. Somit wird es ermöglicht, eine grundsätzlich beliebige Anzahl an Seitenschiebern mit den jeweiligen Koppelanordnungen vorzusehen. Gleichfalls wird hierdurch eine Umsetzung eröffnet, wobei ein Teil der vorteilhaften Ausführungsform einer Spannvorrichtung durch ein vorhandenes Dreibackenfutter mit den Grundbackenträgern des Dreibackensfutters als drei Seitenschieber realisiert wird und das Oberteil des Vorrichtungsträgers mit den Spanngrundträgern und der maßgeblichen Kopplungsanordnung als Einheit auf das Dreibackenfutter montiert wird.

Aufgrund der zunächst freien Verschiebbarkeit eines Spanngrundträgers relativ zum gekoppelten Spanngrundträger ist es vorteilhaft, wenn zumindest eine Stellung bereitgestellt wird, in der diese Verschiebbarkeit der Spanngrundträger unterbunden wird. Hierbei ist vorgesehen, dass in vorteilhafter Ausführungsform eine innere und/oder äußere Endstellung vorhanden ist, welche gekennzeichnet ist durch die Begrenzung des Stellwegs zweier gekoppelter Spanngrundträger in den jeweiligen radialen Trägerrichtungen bei einer Bewegung zur Drehachse hin bzw. von der Drehachse weg. Insofern wirkt eine Begrenzungsanordnung dergestalt, dass eine Ausgleichsbewegung zwischen zwei Spanngrundträgern über die gekoppelte Außenwippe in der Endstellung verhindert wird. Somit wird zugleich eine Schwenkbewegung der zugehörigen Außenwippe verhindert. Wenngleich es für den eigentlichen Spannvorgang unerheblich ist, ist es jedoch zur vorläufigen Positionierung des Werkstücks am Spannfutter besonders vorteilhaft, wenn die Spanngrundträger in den Endstellungen einen im Wesentlichen übereinstimmenden Abstand zur Drehachse aufweisen. Somit kann beim Einlegen des Werkstücks dieses auf einen gleichmäßigen Abstand zu den einzelnen Spannbacken vorläufig ausgerichtet werden.

Zur Umsetzung der Begrenzungsanordnung ist es in einer ersten vorteilhaften Ausführungsform möglich, dass die Spanngrundträger in der Endstellung an Anschlagflächen im Vorrichtungsträger zur Anlage kommen. Das heißt, dass die Trägerführung eine Begrenzung dergestalt aufweist, dass eine definierte Endlage der Spanngrundträger im Vorrichtungsträger unabhängig von der Außenwippe vorliegt. Somit ist der Stellweg der Spanngrundträger durch die Trägerführung bzw. durch eine Zuordnung der Spanngrundträger zum Vorrichtungsträger definiert.

Gleichfalls ist es möglich, die Trägerführung über die Endstellung hinaus vorzusehen. Dies kann unter Umständen dahingehend erforderlich werden, wenn beispielsweise durch Verschmutzung die Endstellung in der Trägerführung nicht unverändert sichergestellt werden kann. Alternativ zur ersten Ausführung der Begrenzungsanordnung ist es hierbei vorteilhaft, die Begrenzungsanordnung derart zu gestalten, dass an den Außenwippen beabstandete Anschlagflächen vorgesehen sind, welche in der Endstellung am Vorrichtungsträger zur Anlage kommen. Dies bezieht sich darauf, dass die Verschiebung der Außenwippe zu einer Anlage am Vorrichtungsträger führt. Somit wird eine Schwenkbarkeit der Außenwippe zunächst einmal unabhängig von der Betrachtung der Spanngrundträger verhindert. Zugleich führt jedoch die Verhinderung einer Schwenkbewegung der Außenwippe zu der fixen Position der beiden gekoppelten Spanngrundträger zueinander bzw. zur gewünschten Endstellung.

Diese Begrenzungsanordnung bei der Außenwippe kann in gleicher Wirkweise realisiert werden durch beispielsweise zwei beabstandete, hervorstehende Bolzen am Vorrichtungsträger, welche in Längsnuten in den Außenwippen eingreifen. Hierbei definiert die Länge der Längsnuten den möglichen Weg der Außenwippen und somit die Endstellung bzw. Endstellungen, bei der bzw. denen die Schwenkbarkeit der Außenwippe unterbunden wird.

Es ist offensichtlich, dass beide Wirkweisen zur Definition der Endstellung eingesetzt werden können. Somit ist es möglich, zur Definition der Endstellung in der Bewegung zur Drehachse hin beispielsweise die Begrenzungsanordnung am Spanngrundträger direkt vorzusehen und die Endstellung in der Richtung von der Drehachse weg mittels einer Begrenzungsanordnung bei der Außenwippe.

Erfindungsgemäß ist am Vorrichtungsträger eine schwenkbar gelagerte Mittenwippe angeordnet. Hierbei sind an den beiden Enden der Mittenwippe jeweils Koppelelemente vorzusehen, welche wiederum schwenkbar angebracht sind und schwenkbar mit jeweils einer Außenwippe verbunden sind. Es ist offensichtlich, dass notwendigerweise zwei diagonal über die Drehachse gegenüberliegende Außenwippen zu verbinden sind. Alternativ zur Verbindung an den Außenwippen kann gleichfalls eine Verbindung der Koppelelemente mit den Ausgleichselementen oder Spanngrundträgern gewählt werden. Gelagert wird die Mittenwippe in besonders vorteilhafter Weise in einer mit der Drehachse übereinstimmenden Lagerung.

Durch die Kopplung über die Diagonale wird es erreicht, dass jeweils gegenüberliegende Spanngrundträger zugleich auf die Drehachse zu bewegt werden. Somit wird die Zentrierbewegung der erfindungsgemäßen Spannvorrichtung deutlich verbessert. Dennoch ist unverändert die vorteilhafte Ausgleichsbewegung zwischen zwei Spanngrundträgern über die Außenwippe gegeben. Somit weisen bei vier Spanngrundträgern die gegenüberliegenden Spanngrundträger immer den gleichen Abstand zur Drehachse auf. Ein ansonsten nicht auszuschließendes außermittiges Spannen eines Werkstücks wird durch diese Ausführungsform vorteilhaft unterbunden.

Besonders vorteilhaft ist es, wenn der Stellweg der Spanngrundträger derart ausgelegt wird, dass dieser zwischen 1 mm und 50 mm beträgt. Beim Einsatz verschieblicher Spannbacken über die Verwendung von Backenführungen kann der Stellweg der Spanngrundträger insbesondere auf einen Wert zwischen 5 mm und 15 mm reduziert werden, ohne dass ein Verlust an Stellbereich für die erfindungsgemäße Spannvorrichtung zu befürchten ist. Insofern wird ein kleiner Stellbereich über die erfindungsgemäße Spannvorrichtung bzw. für die Verstellung der Spanngrundträger ermöglicht, während hingegen ein großer Stellbereich über die Verschiebbarkeit der Spannbacken in der Backenführung realisiert wird. Die Definition des Stellwegs kann des Weiteren in Abhängigkeit der Rastverzahnung erfolgen, so dass es sinnvoll ist, zumindest einen doppelten Rastabstand als Stellweg für die Spanngrundträger vorzusehen.

Insbesondere bei senkrecht stehender Drehachse und einem hohen auf der Spannvorrichtung lastenden Werkstückgewicht ist es besonders vorteilhaft, wenn am Vorrichtungsträger zumindest zwei Lastträger angebracht sind bzw. angebracht werden können, wobei sich das aufliegende Werkstückgewicht auf den Lastträgern abstützt und in Richtung der Drehachse keine Auflage des Werkstücks auf den Spannbacken erfolgt. Somit wird sichergestellt, dass eine freie Beweglichkeit der Spannbacken relativ zu einander gegeben ist und die erfindungsgemäße Lösung uneingeschränkt zur Nutzung kommt.

Hinsichtlich der Ausführung des Vorrichtungsträgers gibt es verschiedenste Möglichkeiten. Dieser ist nicht zwingend als ein einziges Bauteil zu verstehen, sondern kann gleichfalls aus einer Mehrzahl von Bauteilen zusammengesetzt sein. Insbesondere die Notwendigkeit der Einbringung von Führungen und Lagerungen führt zu einer vorteilhaft in Drehachs-Richtung ausgeführten mehrschichtigen Bauweise. Wie die einzelnen Bauteile des Vorrichtungsträgers zueinander fixiert werden, ist hierbei unerheblich. In der Regel wird davon auszugehen sein, dass diese mittels Schraubverbindungen aneinander montiert werden. Weiterhin kann es vorteilhaft sein, gezielte Schmiermittelzuführungen zu den Führungen bzw. Lagerungen, z.B. der Stellspindel, einzusetzen. Ebenso ist die Gestaltung des Antriebs für die vorliegende Erfindung zunächst nebensächlich, und der Fachmann wird ausgehend von der gewählten Umsetzung des Stellantriebs den geeigneten Antrieb wählen. Vorteilhaft wird hierbei ein zum üblichen Spannfutter kompatibler Antrieb ausgewählt.

Weiterhin ist es möglich, die Spannvorrichtung als zur Drehmaschine gehörige Einheit vorzusehen, d.h. die Spannvorrichtung ist derart montiert, dass ein Wechsel gegen ein anderes Spannfutter nicht als Regelfall vorgesehen ist. Alternativ hierzu ist die erfindungsgemäße Spannvorrichtung als wechselbares oder zusätzlich montierbares Spannfutter einsetzbar. Insofern ist es zum einen möglich, einen einfachen Austausch des Spannfutters der Drehmaschine gegen die erfindungsgemäße Spannvorrichtung vorzusehen. Zum anderen kann, insbesondere bei horizontal ausgerichteten Spannfuttern (bzw. senkrecht stehender Drehachse), eine erfindungsgemäße Spannvorrichtung als eine separate Einheit auf das vorhandene Spannfutter montiert werden.

Die Betätigung des Antriebs der Spannvorrichtung kann im einfachsten und gewöhnlich ausreichenden Fall manuell erfolgen. Alternativ ist es möglich, einen hydraulischen bzw. pneumatischen oder elektrischen Antrieb vorzusehen. Insbesondere bei der Ausführungsvariante mit dem Keilantrieb ist der Einsatz eines Hydraulik- oder Pneumatikzylinders der elektrischen Lösung vorzuziehen.

Zur Reduzierung der Kosten ist es vorteilhaft, wenn alle Wiederholteile identisch ausgeführt werden. Dies betrifft insofern die Spanngrundträger, die Außenwippen, die Ausgleichselemente sowie die Koppelelemente und ggf. die Seitenschieber. Im Falle der Verstellung mittels Keilführungen oder Spindelantrieb bietet die Auslegung der Seitenschieber als spiegelbildliche Bauteile neben den Vorteilen der gleichmäßigen Kraftverteilung gleichfalls einen Kostenvorteil hinsichtlich Konstruktion und Herstellung.

Es ist offensichtlich, dass es in der Anwendung von Ausgleichselementen und/oder bei der Verwendung von Seitenschiebern, bei den Koppelelementen sowie bei der Mittenwippe jeweils einer schwenkbaren Lagerung eines Bauteils relativ zu einem anderen Bauteil bedarf. Hierzu stehen dem Fachmann verschiedene Lösungen zur Verfügung, beispielsweise mittels jeweils eines Bolzens an einem Bauteil und Ösen an dem anderen Bauteil. Die Zuordnung der Bolzen zu dem einen oder anderen Teil wird der Fachmann je nach Zweckmäßigkeit und baulichen Gegebenheiten wählen, und sie ist vom Gedanken der Erfindung unabhängig.

Die nachfolgenden Figuren skizzieren beispielhafte Ausführungsformen für eine erfindungsgemäße Spannvorrichtung.

Es zeigen:
- Fig. 1: ein erstes Beispiel einer Spannvorrichtung 01 in Draufsicht mit vier Spanngrundträgern 06 sowie einer Spannbacke 11, wobei die Spannvorrichtung nicht sämtliche Merkmale des Anspruchs 1 aufweist, aber das Verständnis der Erfindung erleichtert;
- Fig. 2: eine Ansicht von unten auf die Spannvorrichtung 01 aus Fig. 1;
- Fig. 3: ergänzend eine Ansicht von unten vergleichbar mit Fig. 2 unter Weglassung des Gehäuseunterteils sowie der Koppelanordnung;
- Fig. 4: einen Schnitt zur Spannvorrichtung gemäß Fig. 1 entlang der Schnittlinie B-B;
- Fig. 5: eine Schnittansicht zur Spannvorrichtung gemäß Fig. 1 entlang der Schnittlinie A-A;
- Fig. 6: eine Variante der Stelleinrichtung;
- Fig. 7: eine erfindungsgemäße Variante zur Kopplungsanordnung.

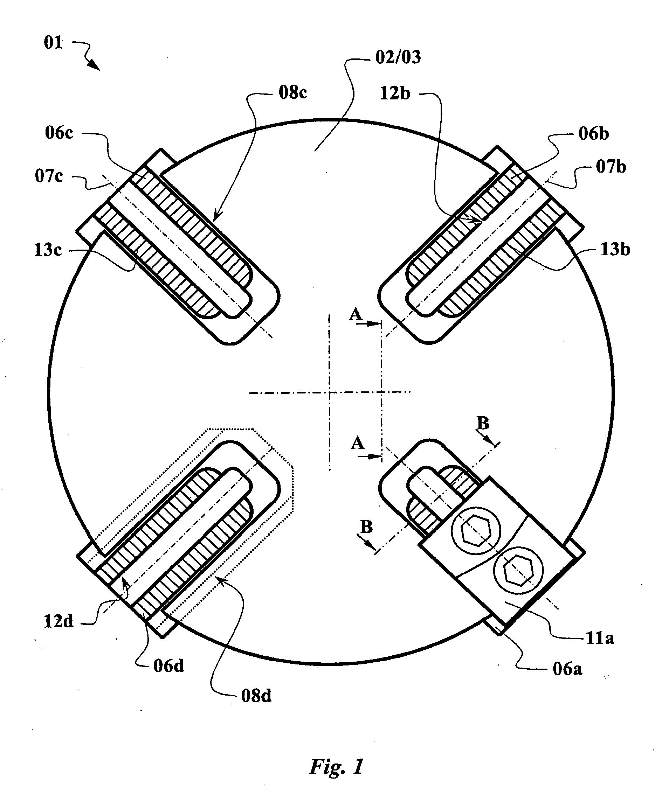

In der **Figur 1** wird eine erste Spannvorrichtung 01 skizziert. Zu erkennen ist zunächst einmal in Kreisform der Vorrichtungsträger 02 bzw. das Gehäuseoberteil 03 des Vorrichtungsträgers 02. Im Vorrichtungsträger 02 sind jeweils Führungsnuten in Form der Trägerführung 08a bis 08d vorhanden. In diesen Führungsnuten sind die vier Spanngrundträger 06a bis 06d eingesetzt. Entlang der jeweiligen Trägerrichtungen 07a bis 07d sind die jeweiligen Spanngrundträger 06 in den Trägerführungen 08 verschiebbar. Weiterhin skizziert ist beispielhaft eine Spannbacke 11a auf dem Spanngrundträger 06a. Hierbei ist die Spannbacke 11 entlang von Backenführungen 12 parallel zu den Trägerführungen 06 verschiebbar. Insofern ist die Spannbacke 11 gleichfalls radial zur Drehachse verstellbar. Zur Sicherung der Lage der Spannbacke 11 relativ zum Spanngrundträger 06 weist die Backenführung auf ihrer Oberseite eine Rastverzahnung 13 auf. Insofern kann die Spannbacke 11 im Rastintervall der Rastverzahnung 13 auf dem Spanngrundträger 06 positioniert und fixiert werden.

Bei Betrachtung der Spannvorrichtung 01 in Fig. 1 sind zunächst keine relevanten Unterschiede zu einem gewöhnlichen Vierbackenfutter aus dem Stand der Technik zu erkennen. Dies wird vielmehr erst durch die erfindungsgemäße Bewegungsform und Antriebskopplung der Spanngrundträger 06 erreicht.

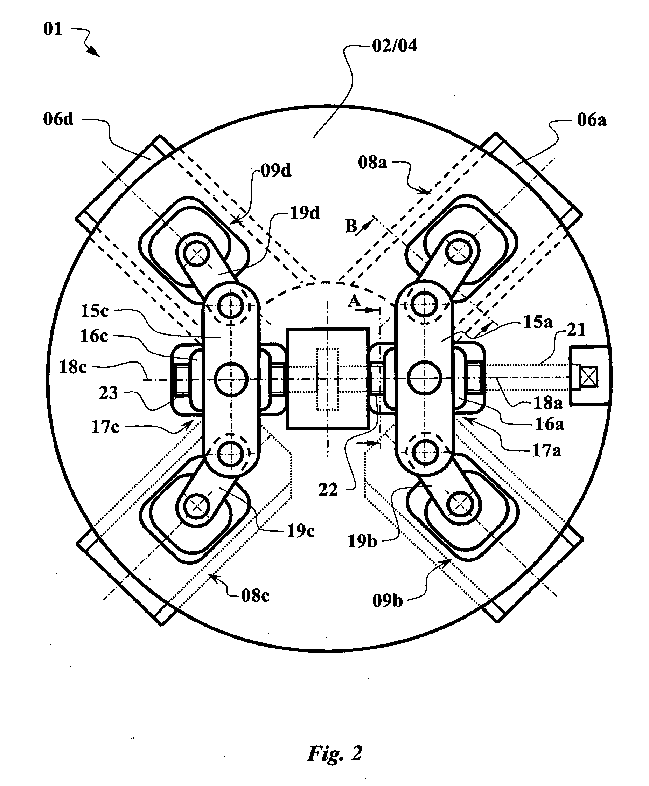

Hierzu zeigt **Figur 2** eine Ansicht von unten auf das Beispiel der Spannvorrichtung 01 aus Fig. 1. Zu erkennen ist wiederum zunächst einmal der Vorrichtungsträger 02, in diesem Fall das Gehäuseunterteil 04. Aus dem Vorrichtungsträger 02 heraus ragend sind jeweils die vier Spanngrundträger 06a bis 06d erkennbar. Die verdeckte Führung 08 zwischen dem Vorrichtungsträger 02 und den Spanngrundträgern 06 ist hierbei gestrichelt (Führungsnut im Vorrichtungsträger 02) bzw. punktiert (Spanngrundträger 06) zu Verdeutlichung einer möglichen Lage skizziert.

Zwei Spanngrundträger 06a und 06b bzw. 06c und 06d sind über jeweils eine Außenwippe 15a bzw. 15c gekoppelt. Hierbei ist eine Schwenkbarkeit der Außenwippen 15 sowie eine bewegliche Verbindung zwischen der Außenwippe 15 und den Spanngrundträgern 06 vorhanden. Somit wird offensichtlich, dass eine Verschiebung eines ersten Spanngrundträgers, beispielsweise 06a, zur Mitte bzw. zur Drehachse hin über ein Schwenken der Außenwippe 15a zu einer Verschiebung des gekoppelten Spanngrundträgers 06b nach außen führt.

Zum Ausgleich des zwangsläufig vorhandenen Winkelversatzes innerhalb der Bewegung der Spanngrundträger 06 entlang ihrer Verschiebbarkeit in Trägerrichtung 07 sind zwischen den Außenwippen 15 und den jeweiligen Spanngrundträgern 06 Ausgleichselemente 19 zwischengeordnet. Insofern wird die Bewegung der Spanngrundträger 06 über das mit einem Bolzen angekoppelte Ausgleichselement 19 auf die wiederum mittels Bolzen angekoppelte Außenwippe 15 übertragen.

Weiterhin ist die Außenwippe 15 in dieser Spannvorrichtung mittels eines Bolzens drehbar an einem Seitenschieber 16 gelagert. Insofern kann die Außenwippe 15 relativ gegenüber dem Seitenschieber 16 geschwenkt werden. Die Seitenschieber 16 sind wiederum jeweils in Schieberführungen 17 gelagert. Wenngleich dies nicht zwingend erforderlich ist, verbessert dies jedoch die Stabilität der gesamten Ausführungsform. Hierbei sind die jeweiligen Seitenschieber 16a bzw. 16b in Schubrichtung 18a bzw. 18b verschiebbar.

Als Antriebsvariante wird für diese Spannvorrichtung 01 eine Stellspindel 21 eingesetzt. Hierbei durchdringt die Stellspindel 21 den ersten Seitenschieber 16a mit einem Linksgewinde 22 sowie den zweiten gegenüberliegenden Seitenschieber 16c mittels eines Rechtsgewindes 23. Insofern ist es offensichtlich, dass eine Drehbewegung der Stellspindel 21 zu einer gegenläufigen Bewegung der Seitenschieber 16a und 16b aufeinander zu bzw. voneinander weg führt. Zur Sicherstellung der symmetrisch übereinstimmenden Lage der Seitenschieber 16 und somit zugleich auch der gekoppelten Spanngrundträger 06 in Ausgangsstellung wird die Stellspindel 21 mittig und senkrecht zur Drehachse zentriert bzw. positioniert. Insofern ist sichergestellt, dass beide Seitenschieber 16 jeweils den gleichen Abstand zur Drehachse aufweisen. Durch die Kopplung mittels schwenkbarer Außenwippe 15 und über die Kopplung der Ausgleichselemente 19 weisen somit die Spanngrundträger 06 bei einer gedanklichen Vernachlässigung der Schwenkbarkeit der Außenwippe 15 den gleichen Abstand zur Drehachse auf.

Weiterhin zu erkennen ist eine Begrenzungsanordnung 09a bis 09d bezüglich jedes Spanngrundträgers 06a bis 06d. Realisiert wird in diesem Ausführungsbeispiel die Begrenzungsanordnung 09 derart, dass der Spanngrundträger 06 gleichfalls auf der Rückseite eine Ausnehmung im Gehäuseunterteil 04 durchgreift. Hierbei weist die Ausnehmung in Trägerrichtung 07 jeweils zwei Anschlagsflächen auf, gegen die der durchdringende Teil der Spanngrundträger 06 am Ende des Stellwegs anschlägt. Mittels eines übereinstimmenden Abstands der Anschlagsflächen zur Drehachse wird sichergestellt, dass am Ende der beiden Stellwege nach innen sowie nach außen ein weitestgehend übereinstimmender Abstand der Spanngrundträger 06 zur Drehachse vorliegt. Insofern wird bei gleicher Positionierung der Spannbacken 11 auf den Spanngrundträgern 06 eine übereinstimmende Positionierung der Spannflächen im Abstand zur Drehachse realisiert. Somit wird die Aufnahme von Werkstücken auf eine möglichst zentrische Lage deutlich begünstigt, so dass eine Orientierung an dem Abstand zu den Spannflächen erfolgen kann.

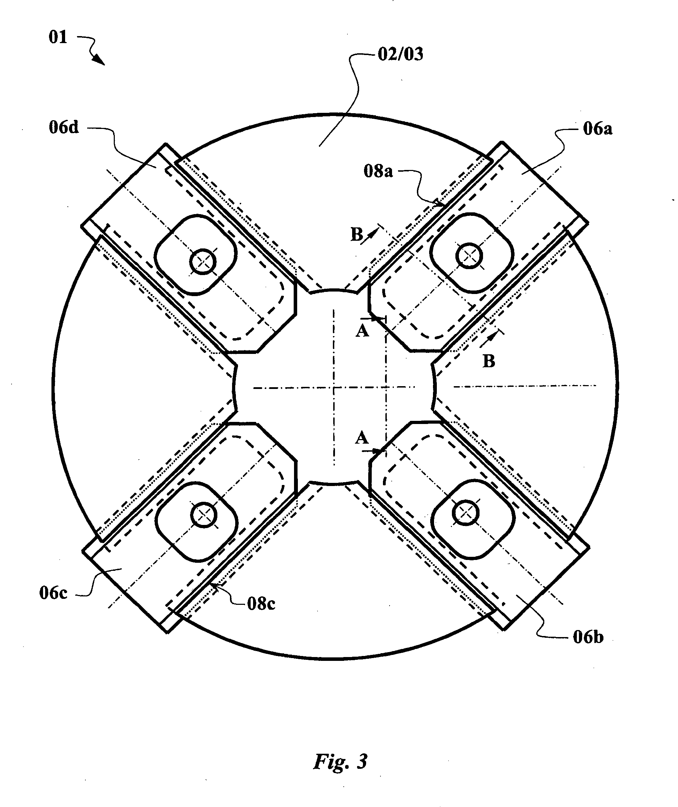

Zur nochmaligen Verdeutlichung der Lage der Spanngrundträger 06 im Vorrichtungsträger 02 skizziert **Figur 3** die Spannvorrichtung 01 unter Weglassen der Kopplungsanordnung sowie des Gehäuseunterteils 04. Insofern ist gleichfalls in dieser Ansicht von unten das Gehäuseoberteil 03 des Vorrichtungsträgers 02 zu erkennen. Sternförmig verlaufen die um 90° jeweils versetzten Trägerführungen 08, in denen die einzelnen Spanngrundträger 06 verschiebbar gelagert sind.

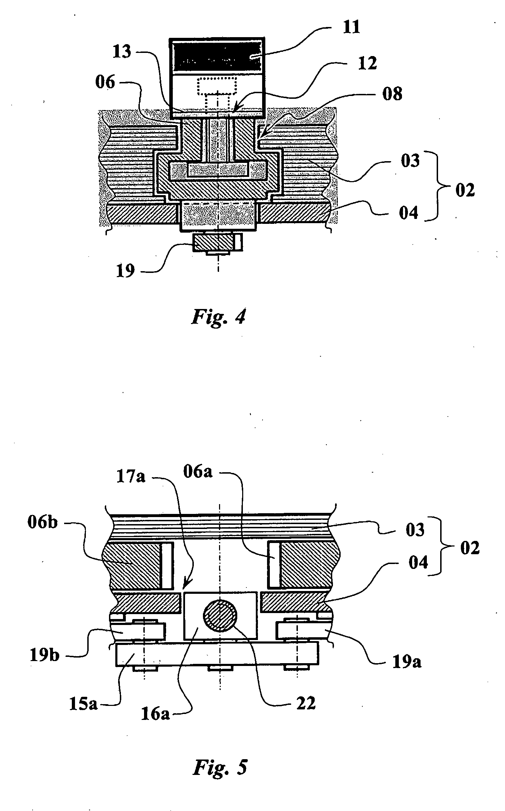

Die **Figur 4** zeigt in einem Teilschnitt entlang der Schnittlinie B-B (siehe Fig. 1 bis Fig. 3) die Anordnung des Spanngrundträgers 06a im Vorrichtungsträger 02. Zu erkennen ist zunächst einmal, dass in diesem Ausführungsbeispiel der Vorrichtungsträger 02 ein Gehäuseoberteil 03 sowie ein Gehäuseoberteil 04 umfasst. Im Gehäuseoberteil 03 ist hierbei die Führungsnut der Trägerführung 08 integriert. In dieser befindet sich mit beispielhaft übereinstimmender Kontur der Spanngrundträger 06, welcher seinerseits innerhalb der Kontur liegend eine Backenführung 12 aufweist. Innerhalb der Backenführung 12 kann die Spannbacke 11 entlang der Trägerrichtung 07 verschoben werden, wobei die Positionierung und Sicherung der Lage mittels einer Rastverzahnung 13 realisiert wird. Weiterhin ist zu erkennen, dass der Spanngrundträger 06 das Gehäuseunterteil 04 durchdringt und an dieser Durchdringung das Ausgleichselement 19 schwenkbar gelagert angebracht ist.

Einen weiteren Teilschnitt skizziert die **Figur 5** entlang der Schnittlinie A-A (siehe Fig. 1 bis Fig. 3) mit der Kopplungsanordnung sowie dem Antrieb. Zu erkennen ist wiederum der Vorrichtungsträger 02 mit dem Gehäuseoberteil 03 und dem Gehäuseunterteil 04. Ansatzweise zu erkennen sind weiterhin beidseitig die Spanngrundträger 06a bzw. 06b. Diese sind jeweils über das Ausgleichselement 19a bzw. 19b schwenkbar mit der Außenwippe 15a gekoppelt. Diese Außenwippe 15a wiederum ist schwenkbar am Seitenschieber 16a angebracht. Der Antrieb für den Seitenschieber 16a erfolgt in dieser Spannvorrichtung mittels der Stellspindel 21, wobei diese ein entsprechendes Linksgewinde 22 im Seitenschieber 16a aufweist. Der Seitenschieber 16a wird weiterhin innerhalb der Schieberführung 17a gelagert, wenngleich die Lagerung der Seitenschieber 16 durch die Stellspindel 21 selber bereits hinreichend wäre.

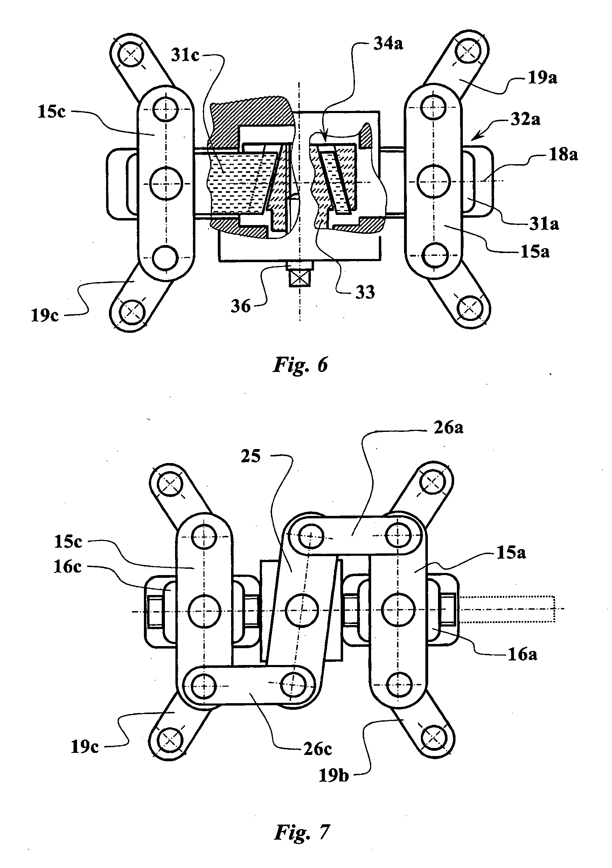

Alternativ zur Bewegung der Seitenschieber 16 durch eine Stellspindel eröffnet sich die Möglichkeit der Verwendung einer Keilführung. Dies zeigt beispielhaft die **Figur 6**, wobei hier lediglich auf die Umsetzung der Schieberbewegung eingegangen wird. Zu erkennen sind wiederum zunächst einmal beidseitig die Außenwippen 15a und 15c. Diese sind jeweils auf den Seitenschiebern 31a bzw. 31c schwenkbar angeordnet. Die Bewegung der Seitenschieber 31a bzw. 31b, welche jeweils in entsprechenden Schieberführungen 32a bzw. 32b gelagert sind, wird realisiert durch gegenläufige Keilführungen 34a bzw. 34b. Der Antrieb erfolgt hierbei mittels des Keilelements 33, welches wiederum durch die Stellspindel 36 verschoben werden kann. Folglich führt eine Verschiebung des senkrecht zu der Ausrichtung der Seitenschieber 31 angeordneten Keilelements 33 zu einer Abstandsveränderung in den Keilführungen 34 und somit zu einer Bewegung der Seitenschieber 31 aufeinander zu bzw. voneinander weg.

Zur Verbesserung der Zentrierung beim Spannen von Werkstücken wird erfindungsgemäß eine Ausführungsform mit einer Ergänzung gemäß **Figur 7** gewählt. Diese wiederum nur teilweise skizzierte Ausführungsform zeigt gleichfalls beidseitig die Außenwippen 15a bzw. 15c. Unabhängig vom Antrieb der Außenwippen 15 wird in diesem Ausführungsbeispiel eine Kopplung der diagonal gegenüberliegenden Enden der Außenwippen 15a bzw. 15c vorgenommen. Dies erfolgt mittels Anordnung einer Mittenwippe 25 mit einer zur Drehachse übereinstimmenden Lagerung am Vorrichtungsträger 02, wobei die Mittenwippe 25 an den beiden Enden mit jeweils einem diagonal gegenüberliegenden Ende der Außenwippen 15a bzw. 15c mittels zwischengeordneter Koppelelemente 26a bzw. 26c verbunden ist. Diese Koppelelemente 26 sind gleichfalls beidseitig schwenkbar gelagert. Insofern ist offensichtlich, dass ein Verschieben des Spanngrundträgers 06a an dem Ausgleichselement 19a zu einer übereinstimmenden Bewegung des gegenüberliegenden Ausgleichselements 19c und somit des Spanngrundträgers 06c führt. Aufgrund der Kopplung über die Außenwippen 15a bzw. 15c kommt es zwangsläufig zu einer entgegengesetzten Bewegung der beiden weiteren Spanngrundträger 06b bzw. 06d. Durch den Einsatz der Mittenwippe 25 und der Koppelelemente 26a bzw. 26c wird ein zentrisches Spannen somit deutlich vereinfacht.

### Bezugszeichenliste

- 01: Spannvorrichtung
- 02: Vorrichtungsträger
- 03: Gehäuseoberteil
- 04: Gehäuseunterteil

- 06: Spanngrundträger
- 07: Trägerrichtung
- 08: Trägerführung
- 09: Begrenzungsanordnung

- 11: Spannbacke
- 12: Backenführung
- 13: Rastverzahnung

- 15: Außenwippe
- 16: Seitenschieber
- 17: Schieberführung
- 18: Schubrichtung
- 19: Ausgleichselement

- 21: Stellspindel
- 22: Linksgewinde an Stellspindel
- 23: Rechtsgewinde an Stellspindel
- 25: Mittenwippe
- 26: Koppelelement

- 31: Seitenschieber
- 32: Schieberführung
- 33: Keilelement
- 34: Keilführung

- 36: Antrieb

## Patentansprüche

1. Spannvorrichtung (01) zur Verwendung an einer Drehmaschine, insbesondere bei einer Planscheibe, mit einer Mehrzahl von sternförmig zu einer Drehachse in einem Vorrichtungsträger (02) verlaufenden Trägerführungen (08), wobei in einer Trägerführung (08) ein Spanngrundträger (06), an dem zumindest eine Spannbacke (11) zum Spannen von Werkstücken angebracht werden kann, in einer Trägerrichtung (07) verschiebbar gelagert ist, und wobei mittels eines Stellantriebs (21, 36) der Spannvorrichtung (01) die Spanngrundträger (06) zugleich in den jeweiligen Trägerrichtungen (07) verstellt werden können, wobei zumindest zwei Spanngrundträger (06) mittels einer Außenwippe (15) direkt oder indirekt miteinander gekoppelt sind, wobei zumindest in der Mitte des Stellweges der Spanngrundträger (06) eine begrenzte Verschiebung eines Spanngrundträgers (06a, 06c bzw. 06b, 06d) nach innen zu einem Schwenken der Außenwippe (15a, 15c) und einer Verschiebung des anderen gekoppelten Spanngrundträgers (06b, 06d bzw. 06a, 06c) nach außen führt,
**gekennzeichnet durch**
eine am Vorrichtungsträger (02) schwenkbar gelagerte Mittenwippe (25), wobei an den beiden Enden der Mittenwippe (25) jeweils ein Koppelelement (26a, 26c) schwenkbar angebracht ist, wobei die Koppelelemente (26a, 26c) wiederum schwenkbar mit jeweils einer Außenwippe (15a, 15c) und/oder einem Ausgleichselement (19a, 19c) und/oder einem Spanngrundträger (06a, 06c) diagonal über die Drehachse gegenüberliegend verbunden sind.

2. Spannvorrichtung (01) nach Anspruch 1,
**dadurch gekennzeichnet,**
**dass** am Spanngrundträger (06) eine parallel zur Trägerführung (07) liegende Backenführung (12) vorhanden ist.

3. Spannvorrichtung nach Anspruch 1,
**dadurch gekennzeichnet,**
**dass** am Spanngrundträger zwei symmetrisch zur Trägerführung liegende Backenführungen vorhanden sind.

4. Spannvorrichtung nach Anspruch 1,
**dadurch gekennzeichnet,**
**dass** am Spanngrundträger eine Pendelvorrichtung schwenkbar gelagert ist, wobei auf der Pendelvorrichtung zumindest zwei Backenführungen vorhanden sind.

5. Spannvorrichtung (01) nach einem der Ansprüche 1 bis 4,
**dadurch gekennzeichnet,**
**dass** an der Backenführung (12) eine Rastverzahnung (13) vorhanden ist, wobei zumindest eine Spannbacke (11) entlang der Backenführung (12) verschoben und im Rastintervall fixiert werden kann.

6. Spannvorrichtung (01) nach einem Ansprüche 1 bis 5,
**dadurch gekennzeichnet,**
**dass** zumindest zweimal eine Anordnung mit einer Außenwippe (15a bzw. 15c) und zwei Spanngrundträgern (06a, 06b bzw. 06c, 06d) vorhanden ist.

7. Spannvorrichtung (01) nach einem der Ansprüche 1 bis 6,
**dadurch gekennzeichnet,**
**dass** zwischen der Außenwippe (15a bzw. 15c) und den beiden gekoppelten Spanngrundträgern (06a, 06b, bzw. 06c, 06d) jeweils ein beidseitig schwenkbar gelagertes Ausgleichselement (19a, 19b bzw. 19c, 19d) angeordnet ist.

8. Spannvorrichtung (01) nach einem Ansprüche 1 bis 7,
**dadurch gekennzeichnet,**
**dass** die Außenwippe (15a bzw. 15c) mittels des Stellantriebs (21, 36) linear in eine Schubrichtung (18a bzw. 18c) verschoben werden kann, wobei insbesondere die zwei zugehörigen Trägerrichtungen (07a, 07b bzw. 07c, 07d) symmetrisch zu einer Ebene aus der Schubrichtung (18) und der Drehachse angeordnet sind.

9. Spannvorrichtung (01) nach Anspruch 8,
**dadurch gekennzeichnet,**
**dass** die Außenwippe (15) schwenkbar mit einem in einer Schubrichtung (18) verschiebbaren Seitenschieber (16, 31) verbunden ist, wobei der im Vorrichtungsträger (02) gelagerte Seitenschieber (16, 31) mittels des Stellantriebs (21, 36) in Schubrichtung (18) bewegt werden kann.

10. Spannvorrichtung (01) nach Anspruch 9,
**dadurch gekennzeichnet,**
**dass** der Stellantrieb eine in Schubrichtung angeordnete Stellspindel (21) umfasst, wobei die Stellspindel (21) in einem ersten Seitenschieber (16a) mit einem Linksgewinde (22) und in einem zweiten gegenüberliegenden Seitenschieber (16c) mit einem Rechtgewinde (23) gelagert ist, wobei eine Drehung der Stellspindel (21) zu einer gegenläufigen Bewegung der Seitenschieber (16a, 16c) aufeinander zu oder voneinander weg führt.

11. Spannvorrichtung (01) nach Anspruch 9,
**dadurch gekennzeichnet,**
**dass** zwei Seitenschieber (31 a, 31 c) über eine Keilführung (34a, 34c) mit einem Keilelement (33) gekoppelt sind, wobei eine Stellbewegung des Keilelements (33) in einer Stellrichtung mittels des Stellantriebs (36), insbesondere mittels einer Stellspindel, insbesondere senkrecht zur Schubrichtung, zu einer entgegengesetzten Bewegung der Seitenschieber (31 a, 31 c) führt.

12. Spannvorrichtung (01) nach einem der Ansprüche 1 bis 11,
**gekennzeichnet durch**
eine Begrenzungsanordnung (09), dergestalt, dass bei einer inneren und/oder äußeren Endstellung der Stellweg zweier gekoppelter Spanngrundträger (06a, 06b bzw. 06c, 06d) in den jeweiligen radialen Trägerrichtungen (07) in Richtung zur Drehachse hin bzw. von der Drehachse weg begrenzt und eine Schwenkbewegung der zugehörigen Außenwippe (15a bzw. 15c) verhindert wird, wobei die Spanngrundträger (06a, 06b bzw. 06c, 06d) einen im Wesentlichen übereinstimmenden Abstand zur Drehachse aufweisen.

13. Spannvorrichtung (01) nach Anspruch 12,
**dadurch gekennzeichnet,**
**dass** die Spanngrundträger (06) in der Endstellung an Anschlagflächen im Vorrichtungsträger (02) zur Anlage kommen.

14. Spannvorrichtung nach Anspruch 12 oder 13,
**dadurch gekennzeichnet,**
**dass** die Außenwippe beabstandete Anschlagflächen aufweist, welche in der Endstellung am Vorrichtungsträger zur Anlage kommen.

15. Spannvorrichtung (01) nach einem der Ansprüche 1 bis 14,
**dadurch gekennzeichnet,**
**dass** der Stellweg des Spanngrundträgers (06) zwischen 1 mm und 50 mm, insbesondere zwischen 5 mm und 15 mm, beträgt.

## Claims

1. A clamping device (01) for use on a lathe, in particular with a face chuck, comprising a plurality of support guides (08) arranged in a star-shaped formation in relation to an axis of rotation in a device support (02), wherein in one support guide (08), a basic clamping support (06), on which at least one clamping jaw (11) for clamping workpieces can be attached, is mounted slidably in one support orientation (07), and wherein the basic clamping supports (06) can simultaneously be adjusted in the respective support orientations (07) by means of an adjusting drive (21, 36) of the clamping device (01),wherein at least two basic clamping supports (06) are coupled directly or indirectly to one another by means of an outer rocker (15), wherein, at least in the middle of the adjusting path of the basic clamping supports (06), a limited inward displacement of a basic clamping support (06a, 06c and 06b, 06d, respectively) leads to a swivelling of the outer rocker (15a, 15c) and to an outward displacement of the other coupled basic clamping support (06b, 06d and 06a, 06c, respectively)
**characterised by**
a central rocker (25) mounted swivelably to the device support (02), wherein one coupling element (26a, 26c) is in each case attached swivelably to the two ends of the central rocker (25), wherein the coupling elements (26a, 26c) in turn have a swivelable connection diagonally opposite across the axis of rotation with a respective outer rocker (15a, 15c) and/or a compensating element (19a, 19c) and/or a basic clamping support (06a, 06c).

2. The clamping device (01) according to Claim 1,
**characterised in that**
the basic clamping support (06) comprises a jaw guide (12) arranged in parallel with the support guide (08).

3. The clamping device according to Claim 1,
**characterised in that**
the basic clamping support comprises two jaw guides arranged symmetrically to the support guide.

4. The clamping device according to Claim 1,
**characterised in that**
a swivelable pendulum apparatus is mounted to the basic clamping support, wherein the pendulum apparatus comprises at least two jaw guides.

5. A clamping device (01) according to one of the Claims 1 to 4,
**characterised in that**
the jaw guide (12) comprises a detent toothing (13), wherein at least one clamping jaw (11) can be displaced along the jaw guide (12) and can be fixed in the detent interval.

6. A clamping device (01) according to one of the Claims 1 to 5,
**characterised in that**
it comprises at least two assemblies of an outer rocker (15a, respectively 15c) and two basic clamping supports (06a, 06b, respectively 06c, 06d).

7. A clamping device (01) according to one of the Claims 1 to 6,
**characterised in that**
one compensating element (19a, 19b, respectively 19c, 19d) being swivelable to both sides is in each case arranged between the outer rocker (15a, respectively 15c) and the two coupled basic clamping supports (06a, 06b, respectively 06c, 06d).

8. A clamping device (01) according to one of the Claims 1 to 7,
**characterised in that**
the outer rocker (15a, respectively 15c) can be displaced linearly in a direction of thrust (18a, respectively 18c) by means of the adjusting drive (21, 36), wherein the two corresponding support orientations (07a, 07b, respectively 07c, 07d) in particular are arranged symmetrically to a plane formed by the direction of thrust (18) and the axis of rotation.

9. The clamping device (01) according to Claim 8,
**characterised in that**
the outer rocker (15) has a swivelable connection with a lateral slide (16, 31) being displaceable in a direction of thrust (18), wherein the lateral slide (16, 31), which is mounted in the device support (02), can be moved in the direction of thrust (18) by means of the adjusting drive (21, 36).

10. The clamping device (01) according to Claim 9,
**characterised in that**
the adjusting drive comprises an adjusting spindle (21) arranged in line with the direction of thrust, wherein the adjusting spindle (21) is mounted with a left-hand thread (22) in a first lateral slide (16a) and with a right-hand thread (23) in a second, opposite lateral slide (16c), wherein a rotation of the adjusting spindle (21) leads to the lateral slides (16a, 16c) moving in opposite directions toward or away from one another.

11. The clamping device (01) according to Claim 9,
**characterised in that**
two lateral slides (31 a, 31 c) are coupled with a wedge element (33) by means of a wedge guide (34a, 34c), wherein an adjusting movement of the wedge element (33) in an adjusting direction by means of the adjusting drive (36), in particular by means of an adjusting spindle, in particular perpendicularly to the direction of thrust, leads to an opposite movement of the lateral slides (31 a, 31 c).

12. A clamping device (01) according to one of the Claims 1 to 11,
**characterised by**
a limitation assembly (09) in such a way that, with an internal and/or external end position, the adjusting path of two coupled basic clamping supports (06a, 06b, respectively 06c, 06d) is limited in the respective radial support orientations (07) in a direction toward or away from the axis of rotation and that a swivelling movement of the corresponding outer rocker (15a, respectively 15c) is prevented, wherein the basic clamping supports (06a, 06b, respectively 06c, 06d) essentially have the same distance to the axis of rotation.

13. The clamping device (01) according to Claim 12,
**characterised in that**
in the end position, the basic clamping supports (06) abut on abutting surfaces in the device support (02).

14. A clamping device according to one of the Claims 12 or 13,
**characterised in that**
the outer rocker comprises spaced abutting surfaces, which abut on the device support in the end position.

15. A clamping device (01) according to one of the Claims 1 to 14,
**characterised in that**
the adjusting path of the basic clamping support (06) amounts to between 1 mm and 50 mm, in particular between 5 mm and 15 mm.

## Revendications

1. Dispositif (01) de serrage destiné à être appliqué à un tour, en particulier en cas d'un contre-plateau, ayant une pluralité de guidages (08) de support s'étendant en forme d'étoile par rapport à un axe de rotation dans un support (02) de dispositif, dans lequel, dans un guidage (08) de support, un support (06) de serrage de base est monté de façon glissante dans une direction (07) du support, au moins une mâchoire de serrage (11) destinée au serrage de pièces à usiner pouvant être attachée sur ledit support de serrage de base, et dans lequel, au moyen d'un servomoteur (21, 36) du dispositif (01) de serrage, les supports (06) de serrage de base en même temps peuvent être déplacés dans les directions (07) du support correspondantes, dans lequel au moins deux supports (06) de serrage de base sont accouplés directement ou indirectement au moyen d'une bascule (15) extérieure, dans lequel, au moins au milieu du parcours de déplacement des supports (06) de serrage de base, le déroulement d'un glissement limité vers l'intérieur par un support (06a, 06c ou 06b, 06d) de serrage de base aboutit à ce que la bascule (15a, 15c) extérieure soit pivotée et à ce que l'autre support (06b, 06d ou 06a, 06c) de serrage de base accouplé soit glissé vers l'extérieur,
**caractérisé par**
une bascule (25) centrale qui est montée de façon pivotante sur le support (02) de dispositif, un élément (26a, 26c) d'accouplement étant attaché de façon pivotante sur chacune des deux extrémités de la bascule (25) centrale, les éléments (26a, 26c) d'accouplement de leur part chacun ayant un lien pivotant avec une bascule (15a, 15c) extérieure et/ou avec un élément (19a, 19c) de compensation et/ou avec un support (06a, 06c) de serrage de base, lesdits liens étant opposés en diagonale à travers l'axe de rotation.

2. Dispositif (01) de serrage selon la revendication 1,
**caractérisé en ce que**
le support (06) de serrage de base présente un guidage (12) de mâchoire s'étendant parallèlement au guidage (07) de support.

3. Dispositif de serrage selon la revendication 1,
**caractérisé en ce que**
le support (06) de serrage de base présente deux guidages de mâchoire s'étendant symétriquement par rapport au guidage de support.

4. Dispositif de serrage selon la revendication 1,
**caractérisé en ce qu'**
un dispositif pendulaire est monté de façon pivotante sur le support de serrage de base, le dispositif pendulaire présentant au moins deux guidages de mâchoire.

5. Dispositif (01) de serrage selon l'une quelconque des revendications 1 à 4,
**caractérisé en ce que**
le guidage (12) de mâchoire présente une denture (13) d'enclenchement, au moins une mâchoire (11) de serrage pouvant être glissée le long du guidage (12) de mâchoire et fixée dans l'intervalle d'enclenchement.

6. Dispositif (01) de serrage selon l'une quelconque des revendications 1 à 5,
**caractérisé en ce que**
ledit dispositif présente au moins deux dispositions avec une bascule (15a ou 15c) extérieure et avec deux supports (06a, 06b ou 06c, 06d) de serrage de base.

7. Dispositif (01) de serrage selon l'une quelconque des revendications 1 à 6,
**caractérisé en ce qu'**
un élément (19a, 19b ou 19c, 19d) de compensation est chaque fois disposé entre la bascule (15a ou 15c) extérieure et les deux supports (06a, 06b, ou 06c, 06d) de serrage de base accouplés, l'élément de compensation étant monté de façon à pouvoir pivoter des deux côtés.

8. Dispositif (01) de serrage selon l'une quelconque des revendications 1 à 7,
**caractérisé en ce que**
la bascule (15a ou 15c) extérieure peut être linéairement glissée dans une direction (18a ou 18c) de poussée au moyen du servomoteur (21, 36), les deux directions (07a, 07b ou 07c, 07d) des supports associées étant en particulier disposées symétriquement par rapport à un plan étant constitué de la direction (18) de poussée et de l'axe de rotation.

9. Dispositif (01) de serrage selon la revendication 8,
**caractérisé en ce que**
la bascule (15) extérieure a un lien pivotant avec une coulisse (16, 31) latérale qui peut être glissée dans une direction (18) de poussée, la coulisse (16, 31) latérale qui est montée dans le support (02) de dispositif pouvant être déplacée dans la direction (18) de poussée au moyen du servomoteur (21, 36).

10. Dispositif (01) de serrage selon la revendication 9,
**caractérisé en ce que**
le servomoteur comporte une broche (21) de déplacement qui est disposée conformément à la direction de poussée, la broche (21) de déplacement étant montée dans une première coulisse (16a) latérale avec un filet (22) à gauche et dans une deuxième coulisse (16c) latérale, étant opposée, avec un filet (23) à droite, une rotation de la broche (21) de déplacement aboutissant à ce que les coulisses (16a, 16c) latérales, en sens opposé, se rapprochent l'une de l'autre ou s'éloignent l'une de l'autre.

11. Dispositif (01) de serrage selon la revendication 9,
**caractérisé en ce que**
deux coulisses (31a, 31c) latérales sont accouplées avec un élément (33) à coin à travers un guidage (34a, 34c) à coin, un mouvement de déplacement de l'élément (33) à coin, dans une direction de déplacement au moyen du servomoteur (36), en particulier au moyen d'une broche de déplacement, en particulier perpendiculairement à la direction de poussée, aboutissant à ce que les coulisses (31a, 31c) latérales se déplacent en sens inverse.

12. Dispositif (01) de serrage selon l'une quelconque des revendications 1 à 11,
**caractérisé par**
une disposition (09) de limitation, de telle manière qu'en cas d'une position finale intérieure et/ou extérieure, le parcours de déplacement de deux supports (06a, 06b ou 06c, 06d) de serrage de base accouplés soit limité dans les directions (07) des supports radiales correspondantes en direction de l'axe de rotation ou en direction opposée et qu'un mouvement pivotant de la bascule (15a ou 15c) extérieure associée soit empêché, les supports (06a, 06b ou 06c, 06d) de serrage de base possédant une distance essentiellement concordante par rapport à l'axe de rotation.

13. Dispositif (01) de serrage selon la revendication 12,
**caractérisé en ce que,**
dans la position finale, les supports (06) de serrage de base butent contre des surfaces d'arrêt dans le support (02) de dispositif.

14. Dispositif de serrage selon la revendication 12 ou 13,
**caractérisé en ce que**
la bascule extérieure possède des surfaces d'arrêt espacées qui butent contre le support de dispositif dans la position finale.

15. Dispositif (01) de serrage selon l'une quelconque des revendications 1 à 14,
**caractérisé en ce que**
le parcours de déplacement du support (06) de serrage de base s'élève à entre 1 mm et 50 mm, en particulier à entre 5 mm et 15 mm.
